# EUROPÄISCHE PATENTSCHRIFT

(11) **EP 1 687 127 B1**
(45) Veröffentlichungstag und Bekanntmachung des Hinweises auf die Patenterteilung: **18.10.2017**
(21) Anmeldenummer: 04819235.5
(22) Anmeldetag: 05.11.2004
(51) Int. Cl.: B29C 45/36, B29C 45/26, B29C 45/00, B29C 45/43, B29C 33/76

(54) **FORMNESTAUFBAU**
MOLD CAVITY STRUCTURE
STRUCTURE D'UNE CAVITÉ DE MOULE

(30) Priorität: 25.11.2003 DE 10355018
(43) Veröffentlichungstag der Anmeldung: 09.08.2006
(73) Patentinhaber: MHT Mold & Hotrunner Technology AG, 65239 Hochheim (DE)
(72) Erfinder: HÖNISCH, Marek, 65510 Hünstetten (DE); WAGNER, Christian, 55126 Mainz (DE); WEGMANN, Klaus, 55218 Ingelheim (DE)
(74) Vertreter: WSL Patentanwälte Partnerschaft mbB
(86) Internationale Anmeldenummer: PCT/EP2004/052837
(87) Internationale Veröffentlichungsnummer: WO 2005/051632

(56) Entgegenhaltungen:
- GB-A- 1 162 401
- US-A- 4 435 147
- PATENT ABSTRACTS OF JAPAN Bd. 015, Nr. 463 (M-1183), 25. November 1991 (1991-11-25) & JP 03 199023 A (TOYO SEIKAN KAISHA LTD), 30. August 1991 (1991-08-30)

## Beschreibung

Die vorliegende Erfindung betrifft ein Formnest für die Aufnahme in einem Formwerkzeug für die Herstellung von hohlen Formteilen mittels Spritzgießen.

Bei der Kunststoffverarbeitung stellt das Spritzgießen das wichtigste Verfahren zur Herstellung von Formteilen dar. Das Verfahren beruht im wesentlichen darauf, daß die zwischenmolekularen Kräfte, welche die linearen oder verzweigten Ketten der Makromoleküle, aus denen der Kunststoff besteht, zusammenhalten, unter Wärmeeinwirkung schwächer werden, so daß der Kunststoff dann formbar ist. Mit Spritzgießmaschinen können Formteile vom Gramm- bis in den Kilogrammbereich hergestellt werden. Kunststoffe, die mit Hilfe des Spritzgießverfahrens bearbeitet werden, sind in aller Regel Thermoplaste, auch wenn die Verarbeitung von Duroplasten und Elastomeren ebenfalls möglich ist. Beim Spritzgießen wird die pulverförmige oder granulierte Formmasse, z. B. in einer Schneckenspritzgießmaschine, plastifiziert und dann beispielsweise durch axiale Verschiebung der Schnecke durch den Spritzkanal in das geschlossene im allgemeinen gekühlte Werkzeug, z.B. ein Formnest, gedrückt.

Hat sich die Form bzw. der darin vorgesehene Formraum vollkommen mit der Schmelze gefüllt, so erstarrt diese durch Abkühlung. Dabei kommt es im allgemeinen zu einer Volumenverringerung. Diese wird häufig dadurch ausgeglichen, daß nochmals Schmelze aus dem Spritzzylinder in die Form nachgedrückt wird. Zusätzlich wird im allgemeinen die Schwindung auch durch ein entsprechendes Aufmaß in der Formkontur berücksichtigt. Schließlich wird das Werkzeug bzw. das Formnest geöffnet und das fertige Formteil (Spritzgußteil) entformt und ausgestoßen. Das Werkzeug kann wieder geschlossen werden und ein neuer Arbeitszyklus kann mit dem erneuten Einspritzen beginnen.

Mit Hilfe des Spritzgießens ist es möglich, Hohlkörper herzustellen, die in einem späteren Arbeitsschritt, z.B. zu Flaschen oder Kanistern, aufgeblasen werden können. Diese Hohlkörper werden auch als Preforms oder Vorformlinge bezeichnet.

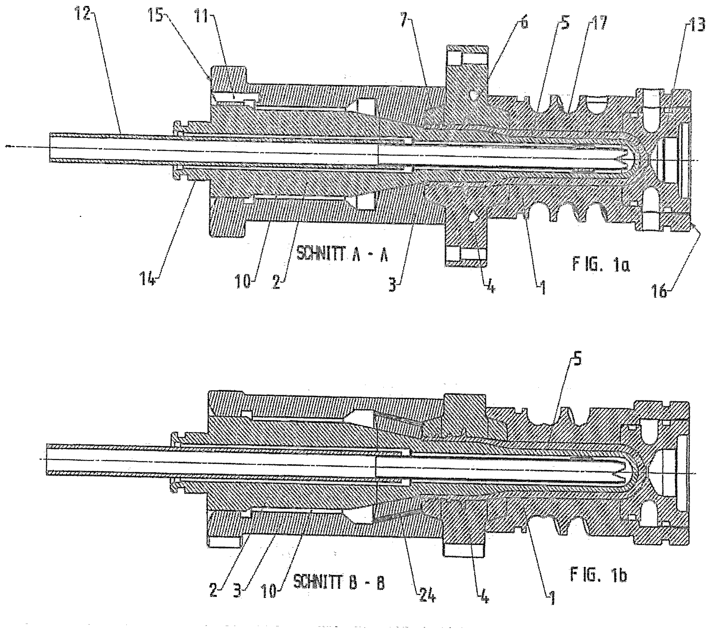

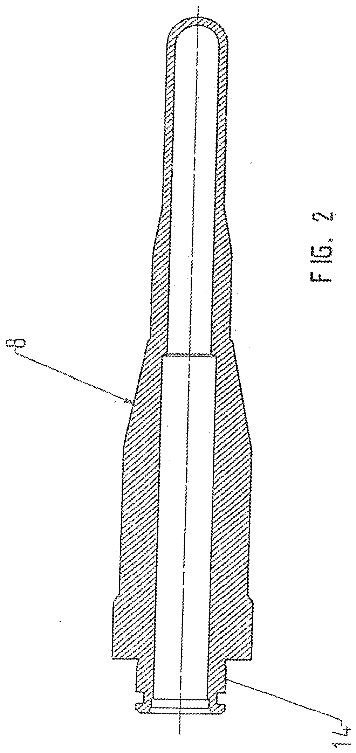

Ein bekanntes Formnest ist in den Figuren 1 bis 3 gezeigt. Die Figuren 1a und 1b zeigen zwei Schnittansichten eines Formnestes in geschlossenem Zustand. Das Formnest bildet einen Formraum 5, in den der plastifizierte Kunststoff eingebracht wird. Der Formraum 5 hat hier die Form eines Vorformlings mit Gewinde 7 und Hals- bzw. Tragring 6. Die Innenkontur des Formraumes 5 wird durch den Kern 2, genauer gesagt durch dessen Außenkontur gebildet. In den Kern 2 ist hier ein Kühlrohr 12 eingelassen, durch das Kühlmittel durch den Kern geleitet werden kann. Der Kern 2, der in Figur 2 noch einmal gesondert in einer Schnittansicht dargestellt ist, hat einen Zapfen 14, mit dem der Kern 2 an einer nicht dargestellten Aufnahmeplatte befestigt werden kann. Die Außenkontur des Formraums 5 wird im vorliegenden Fall durch vier Elemente, nämlich die Halsbacke 4, die Kavität 1, den Stützring 3 und den Bodeneinsatz 13 bestimmt. Es versteht sich aber, daß diese 4-Teilung nicht unbedingt notwendig ist und die Außenkontur des Formlings auch durch weniger oder mehr Elemente bestimmt werden könnte. Für die Herstellung des Vorformlings wird die Kunststoffmasse in einer Plastifiziervorrichtung (nicht gezeigt) plastifiziert und homogenisiert und durch den Bodeneinsatz 13 in den Formraum 5 eingebracht.

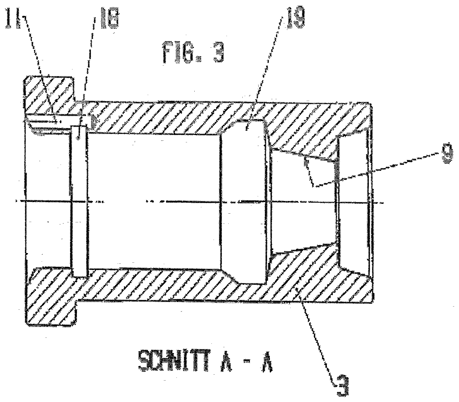

Die Kavität 1 weist Kühlkanäle 17 auf, durch die ein Kühlmittel geleitet werden kann, um die Kavität zügig abkühlen zu können. Der Formraum 5 wird somit von dem Kern 2 und den den Kern in geringem Abstand umgebenden Elementen, nämlich der Halsbacke 4, der Kavität 1 und dem Bodeneinsatz 13 sowie von dem Stützring 3 gebildet. Da jedoch der Kern 2 im allgemeinen eine erhebliche Längsausdehnung hat, ist es notwendig, diesen während des Betriebes zu zentrieren und möglichst zu stützen. Diese Funktion übernimmt in der gezeigten Ausführungsform der Stützring 3, der den Kern 2 umgibt und mit diesem an einem nicht-kammerbildenden Abschnitt in Kontakt tritt. Zu diesem Zweck weist der Kern 2 einen Außenkonus 8 und der Stützring 3, der in Figur 3 noch einmal separat in einer Schnittansicht dargestellt ist, einen entsprechenden Innenkonus 9 auf. Der Außenkonus des Kerns 2 ist derart ausgeführt, daß sich der Kern 2 in Richtung des die Formkammer 5 bildenden Abschnittes verjüngt. Dies hat zur Folge, daß der Kern 8 und die Halsbacke 4 über den Stützring 3 zentriert wird. Darüber hinaus wird durch den Stützring 3 die Schließkraft der Schließeinheit auf die im allgemeinen zweiteilig ausgeführte Halsbacke 4 übertragen. Die Schließkraft der Schließeinheit verhindert, daß sich das Werkzeug unter der Wirkung des hohen Einspritzdrucks öffnet. Durch den Innenkonus des Stützringes 3 wird die auf den Kern ausgeübte Schließkraft über den Außenkonus der Halsbacke 4 übertragen, so daß die Halsbacke 4 daran gehindert wird, sich aufgrund des hohen Einspritzdruckes zu öffnen.

In der hier gezeigten Ausführungsform weist die Halsbacke 4 einen weiteren der Kavität 1 zugewandten Außenkonus und die Kavität 1 einen der Halsbacke 4 zugewandten Innenkonus auf, so daß auch diese beiden Teile über ihre entsprechend angepaßten Konen in Kontakt treten. Daher wird hier die Schließkraft auch von der Kavitätenplatte (nicht gezeigt), in der die Kavität 1 aufgenommen ist, über die entsprechend angepaßten Konen auf die Halsbacke 4 übertragen.

Weiterhin ist eine Zuführung für Ausblasluft vorgesehen. Die Zuführung erfolgt, wie in den Figuren 1 a und 1b zu erkennen ist, von der Aufnahmeplatte (nicht gezeigt), in der der Kern 2 aufgenommen ist, zunächst durch eine Anschlußbohrung 11 in dem Stützring 3. Diese Anschlußbohrung 11 erstreckt sich bis zu einem ersten Abschnitt 18 des Stützringes 3 mit vergrößertem Innendurchmesser, so daß durch die Anschlußbohrung 11 in den Stützring 3 aufgenommene Luft in den von dem Stützring 3 gebildeten Hohlraum treten kann. Die Zufuhr für Ausblasluft erfolgt dann weiter über einen Ringspalt 10, der den Kern 2 zumindest abschnittsweise umgibt. Dieser Ringspalt 10 endet in einem zweiten Abschnitt 19 mit vergrößertem Innendurchmesser des Stützringes 3. Von dort aus verlaufen Zuführbohrungen 24, die in Figur 1b zu sehen sind, bis zu der Kontaktfläche zwischen Stützring 3 einerseits und Halsbacke 4 andererseits.

In dem in den Figuren 1a und 1b gezeigten geschlossenen Zustand des Formnestes kann der plastifizierte Kunststoff in den Formraum 5 eingebracht werden. Nach einer entsprechend gewählten Abkühlzeit wird dann der Stützring 3 zusammen mit dem Kern 2 und der Halsbacke 4, die mit der nicht-gezeigten Aufnahmeplatte verbunden sind, in der Richtung der Aufnahmeseite 15 bewegt, während die Kavität 1 einschließlich des Bodeneinsatzes 13, die mit der nicht-gezeigten Plastifiziereinheit verbunden sind, in Richtung der Anschlußseite 16 bewegt wird. Es sei an dieser Stelle betont, daß die beschriebenen Bewegungen Relativbewegungen sind. So ist es beispielsweise auch möglich, wie dies häufig der Fall ist, die sogenannte heiße Seite, d.h. die Kavität 1 einschließlich des Bodeneinsatzes 12 nicht zu bewegen und Kern 2 und Stützring 3 sowie Halsbacke 4 von der heißen Seite wegzubewegen.

Im nächsten Schritt kann dann die im allgemeinen zweiteilig ausgeführte Halsbacke 4 von dem Halsbereich des Vorformlings entfernt werden, so daß der fertig ausgebildete Vorformling entnommen werden kann.

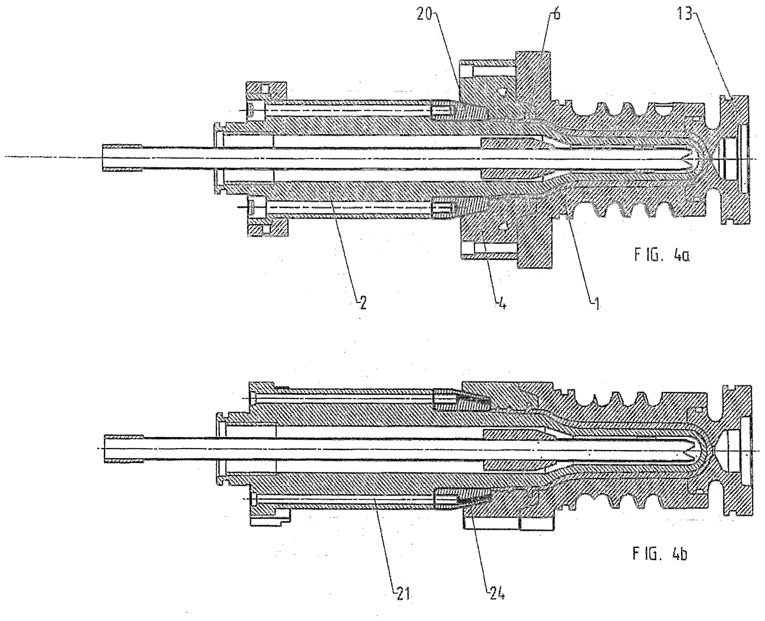

Bei der gezeigten Ausführungsform kann es jedoch im Kontaktbereich zwischen der Halsbacke 4 und der Kavität 1 zu einer geringfügigen Gratbildung kommen, die in vielen Fällen, z.B. bei der Verwendung des Formteils im kosmetischen Bereich, unerwünscht ist. Daher gibt es bereits Ausführungsformen, bei denen dieser Grat, d.h. die Verbindungsstelle zwischen Halsbacke 4 und Kavität 1 an eine weniger störende Stelle, d.h. in die Nähe des Hals- bzw. Tragrings 6 verlegt wurde. Eine solche Ausführungsform ist in der Figur 4a gezeigt. Deutlich zu erkennen ist, daß sich die Kavität 1 hier viel weiter in Richtung des Hals- bzw. Tragringes 6 erstreckt, so daß auch die Trennlinie zwischen Kavität 1 und Halsbacke 4 näher an dem Hals- bzw. Tragring 6 liegt.

Diese Maßnahme alleine würde jedoch zu einer erheblichen Verkleinerung der Halsbacke 4 in Längsrichtung führen, die konstruktiv nicht mehr zu bewerkstelligen wäre. Daher ist bei dieser Ausführungsform die der Aufnahmeseite 15 zugewandte Seite der Halsbacke 4 umgestaltet worden. Die Halsbacke 4 weist hier an ihrer der (nicht-gezeigten) Aufnahmeplatte (links im Bild) zugewandten Seite einen Innenkonus auf, der mit einem mit dem Kern verschraubten aufgesetzten Konuselement 20 in Kontakt tritt. Durch dieses Konuselement 20 wird jedoch lediglich eine zentrierende Funktion des Kerns verwirklicht. Die Schließkraft wird nun nicht mehr von der Aufnahmeseite auf die Halsbacke 4 übertragen, da der Außenkonus des Konuselement 20 ein Öffnen der Halsbacke 4 nicht verhindern kann, sondern im Gegenteil sogar u. U. eine Öffnungskraft auf die Halsbacke überträgt. Aus diesem Grund ist in einigen Ausführungsformen der Außenkonus des Konuselements 20 auch geringfügig kleiner als der Innenkonus der Halsbacke 4 ausgeführt, um das Aufbringen einer Öffnungskraft durch das Konuselement 20 zu vermeiden. Die Schließkraft muß somit ausschließlich über die Kavität 1 zur Verfügung gestellt werden.

Die Zuführung der Ausblasluft erfolgt bei dieser Ausführungsform auf andere Weise. Die Ausblasluft wird hier durch (nur aufwendig herstellbare) Langbohrungen 21 in dem Kern 2 bis zu dem aufgesetzten Konuselement 20 übertragen, der wiederum (in Figur 4b, die eine andere Schnittansicht darstellt, gezeigt) Bohrungen 24 aufweist, die den Ausblasluftkanal 21 mit der Trennfläche zwischen der Halsbacke 4 und dem aufgesetzten Konuselement 20 verbindet.

Die in den Figuren 1 bis 4 gezeigten Ausführungsformen haben den Nachteil, daß bei einem Wechsel zwischen den beiden Ausführungsformen der Kern 2 ausgetauscht werden muß. Die Ausführungsform gemäß den Figuren 4a und 4b ist aufwendig in der Herstellung. Der Kern 2, der den Ausblasluftkanal 21 aufnehmen muß, muß im Vergleich mit der Ausführungsform gemäß Figur 1 mit wesentlich größerer Wandstärke hergestellt werden. Da der gesamte Kern aus dem Vollen gearbeitet wird, bedeutet dies jedoch, daß bei der Bearbeitung der kammerbildenden Außenkontur des Kerns mehr Material entfernt werden muß, was die Maschinenzeit erhöht und zu einer erhöhten Beanspruchung der Maschine führt. Darüber hinaus sind die Bohrungen zur Bildung des Ausblasluftkanals 21 aufwendig in der Herstellung.

Die US 4,435,147 und die GB 1,162,401 zeigen ebenfalls entsprechende Formnester.

Vor dem Hintergrund des beschriebenen Standes der Technik ist es daher Aufgabe der Erfindung, ein Formnest bzw. einen Kern und einen Stützring zur Verfügung zu stellen, das bzw. der leicht an verschiedene Formteile angepaßt werden kann und das bzw. der einfach herzustellen ist.

Diese Aufgabe wird durch ein Formnest mit den Merkmalen von Anspruch 1 gelöst. Dabei schließt sich in axialer Richtung weder der Innenkonus des Stützrings noch der Außenkonus des Kerns direkt an den Formraum an. Die Kern und Stützring sind jeweils derart ausgebildet, daß zwischen dem kammerbildenden Abschnitt, d.h. dem Abschnitt der eine Wand der Formkammer bildet bzw. dessen Außen- bzw. Innenkontur der Innen- bzw. Außenkontur des Formteils entspricht, und dem Außen- bzw. Innenkonus ein zylindrischer Abschnitt liegt, wobei die zylindrischen Abschnitte von Kern und Stützring bei geschlossenem Formnest in Kontakt miteinander treten. Die zylindrischen Abschnitte sorgen in vorteilhafter Weise für eine Zentrierung des Kerns.

Besonders bevorzugt ist eine Ausführungsform, bei der der Innenkonus des Stützrings im wesentlichen an der der Kavität abgewandten Seite des Stützrings vorgesehen ist.

Weiterhin ist eine Halsbacke vorgesehen, deren Innenkontur zumindest abschnittsweise der Außenkontur des Halsbereichs des herzustellenden Formteils entspricht. Dadurch, daß die äußere Begrenzung des Formraums durch mehrere Teile, d.h. durch die Kavität und die Halsbacke, gebildet wird, wird der Entformvorgang, d. h. das Entnehmen des fertigen Formteils aus dem Werkzeug erleichtert.

Weiterhin ist in einer bevorzugten Ausführungsform eine Zuführung für Ausblasluft vorgesehen. Durch die Ausblasluft wird ebenfalls das Entnehmen des Formteils erleichtert. So kann nämlich durch die Ausblasluft das Formteil von dem Kern weg geblasen werden. Dadurch kann die Entnahme des Formteils zuverlässiger und schneller erfolgen, wodurch die Öffnungszeit reduziert werden kann.

In einer besonders bevorzugten Ausführungsform wird die Zuführung für Ausblasluft zumindest abschnittsweise durch einen zwischen Kern und Stützring gebildeten Ringraum verwirklicht. Die Ausbildung der Zuführung für Ausblasluft als Ringraum zwischen Kern und Stützring hat den Vorteil, daß dieser leicht und daher kostengünstig hergestellt werden kann. Es ist hierzu lediglich notwendig, den Innendurchmesser des Stützringes etwas größer zu wählen als den Außendurchmesser des Kerns. Dadurch ergibt sich zwischen Kern und Stützring automatisch ein Ringraum, durch den die Ausblasluft geleitet werden kann.

Es versteht sich, daß dieser Ringraum nicht in den Bereich der miteinander in Verbindung stehenden Konen reichen kann. Daher wird in einer besonders bevorzugten Ausführungsform die Zuführung für Ausblasluft zumindest im Bereich des Innenkonus des Stützrings durch eine vorzugsweise im wesentlichen in Längsrichtung des Stützrings im Stützring verlaufende Bohrung verwirklicht. Da die Längsausdehnung des Konus des Stützrings im allgemeinen nur einen Bruchteil der Längsausdehnung des Stützrings einnimmt, muß die Bohrung ebenfalls nur über diesen kurzen Bereich ausgeführt werden.

Da sich darüber hinaus der Stützring bis zum Formraum erstreckt, kann der Ringraum auch nicht bis zur Halsbacke reichend ausgebildet sein, da dann der Ringraum mit dem Formraum in Verbindung stünde und plastifizierter Kunststoff ebenfalls in den Ringraum eintreten würde. Daher ist in einer besonders bevorzugten Ausführungsform vorgesehen, daß die Zuführung für Ausblasluft zumindest abschnittsweise durch eine im Stützring verlaufende Bohrung verwirklicht ist, wobei diese Bohrung vorzugsweise derart angeordnet ist, daß sie bei geschlossenem Formwerkzeug an der Kontaktfläche von Stützring und Halsbacke endet.

Hinsichtlich des Kerns wird die oben genannte Aufgabe durch die Merkmale des Anspruchs 7 gelöst. Der Außenkonus ist dafür vorgesehen, mit einem entsprechenden Innenkonus des Stützringes in Kontakt zu treten, so daß der Stützring für eine Zentrierung und eine Halterung des Kerns sorgt. Dabei weist der Kern eine den Formraum bildende Seite und eine Anschlußseite zur Aufnahme des Kerns an bzw. in eine Aufnahmeplatte auf. Besonders bevorzugt ist der Außenkonus im wesentlichen im Bereich der Anschlußseite angeordnet.

Um eine Zufuhr für die Ausblasluft zur Verfügung zu stellen, weist der Kern einen Abschnitt zwischen dem Außenkonus und dem den Formraum bildenden Abschnitt auf, dessen Außendurchmesser gegenüber dem Abschnitt mit Außenkonus und gegenüber dem den Formraum bildenden Abschnitt reduziert ist.

Hinsichtlich des Stützrings wird die eingangs genannte Aufgabe durch die Merkmale des Anspruchs 10 gelöst. Der Innenkonus ist dafür vorgesehen, mit einem entsprechenden Außenkonus des Kerns in Eingriff zu treten, um den Kern zu zentrieren und zu halten.

Der Stützring hat eine Aufnahmeseite für das in Eingriff treten mit einer Aufnahmeplatte und eine Kavitätsseite für das in Eingriff treten mit der Halsbacke. Dabei ist besonders bevorzugt der Innenkonus im wesentlichen im Bereich der Aufnahmeseite angeordnet.

Um eine Zuführung für Ausblasluft zur Verfügung zu stellen, ist in einer besonders bevorzugten Ausführungsform eine im wesentlichen in Längsrichtung verlaufende Bohrung zumindest in dem den Innenkonus aufweisenden Abschnitt des Stützrings vorgesehen.

Weitere Vorteile, Merkmale und Anwendungsmöglichkeiten der vorliegenden Erfindung werden deutlich anhand der folgenden Beschreibung bevorzugter Ausführungsformen und der begleitenden Figuren. Es zeigen:
- Figuren 1a und 1b: Schnittzeichnungen einer ersten Ausführungsform des Formnestes des Standes der Technik,
- Figur 2: eine Schnittzeichnung eines Kerns eines Formnestes des Standes der Technik,
- Figur 3: eine Schnittzeichnung eines Stützringes eines Formnestes des Standes der Technik,
- Figuren 4a und 4b: zwei Schnittzeichnungen einer zweiten Ausführungsform eines Formnestes des Standes der Technik,
- Figur 5: eine Schnittzeichnung einer ersten Ausführungsform eines erfindungsgemäßen Formnestes,
- Figur 6: eine Teilschnittansicht des Formnestes von Figur 5,
- Figur 7: eine Schnittansicht des Kerns aus der in Figur 5 gezeigten Ausführungsform,
- Figur 8: eine Schnittansicht des Stützrings des in Figur 5 gezeigten Formnestes,
- Figur 9: eine zweite Schnittansicht des in Figur 8 gezeigten Stützrings,
- Figur 10: eine Schnittansicht einer zweiten Ausführungsform des erfindungsgemäßen Formnestes,
- Figur 11: eine Schnittansicht des Kerns der in Figur 10 gezeigten Ausführungsform eines erfindungsgemäßen Formnestes,
- Figur 12: eine Schnittansicht des Stützrings der in Figur 10 gezeigten zweiten Ausführungsform des erfindungsgemäßen Formnestes und
- Figur 13: eine zweite Schnittansicht des Stützrings von Figur 12.

In den Figuren 1 bis 4 sind zwei Ausführungsformen von Formnestern des Standes der Technik gezeigt, die bereits oben ausführlich beschrieben wurden.

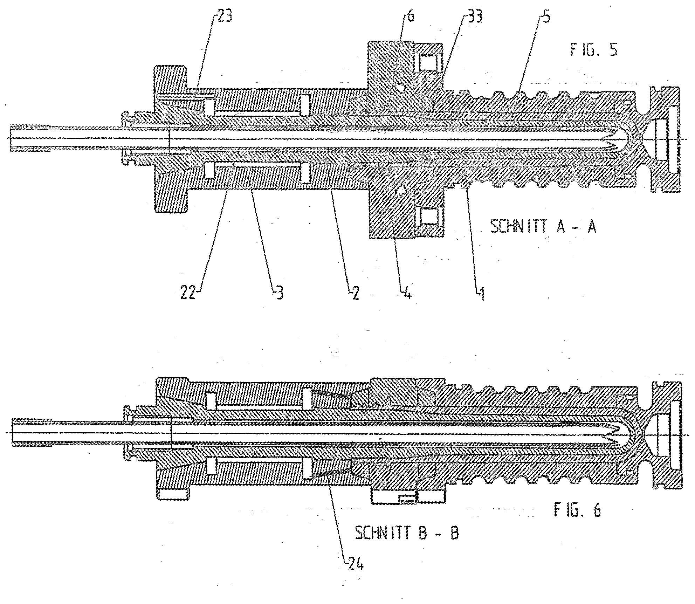

In den Figuren 5 bis 9 sind Schnittansichten einer ersten Ausführungsform des erfindungsgemäßen Formnestes bzw. von Teilen hiervon dargestellt. Figur 5 zeigt eine Schnittansicht des kompletten Formnestes, das ähnlich der in Figur 1 gezeigten Ausführungsform aus einer Kavität 1, einer Halsbacke 4, einem Kern 2 sowie einem Stützring 3 besteht. Auch hier wird der Formraum 5 durch den Kern 2, die Halsbacke 4, den Stützring 3 und die Kavität 1 gebildet. Die Halsbacke 4 umgreift dabei den oberen Teil des Formraums 5 und dient dazu, den Gewinde- und Halsbereich des Formteiles zu formen. Der Formraum 5 wird durch den Abstand zwischen dem Kern 2 und der Halsbacke 4 und der Kavität 1 gebildet. Mit anderen Worten berührt der Kern 2 weder die Halsbacke 4 noch die Kavität 1. Der Stützring 3 bildet die obere Kante des Gewindes bzw. des Halsbereichs des Formteiles.

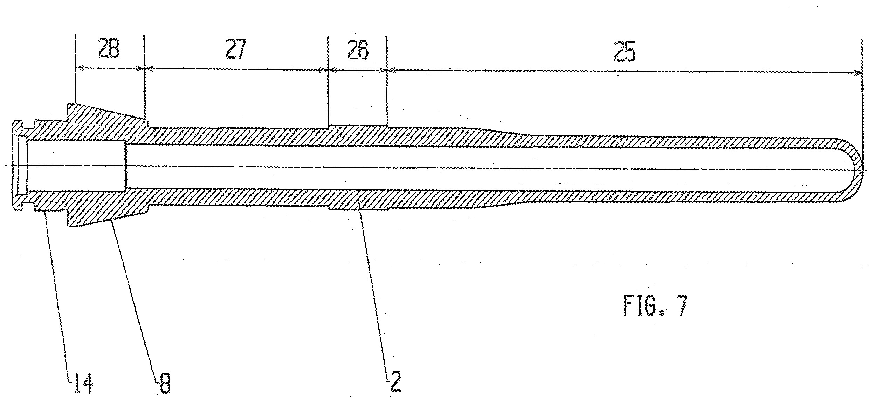

Der Kern 2, der in Figur 7 in einer Schnittansicht noch einmal getrennt dargestellt ist, weist an seinem Kernfuß einen Zapfen 14 auf, der für die Verbindung des Kerns mit der Aufnahmeplatte (nicht gezeigt) vorgesehen ist. Der Kern 2 weist eine Kernspitze auf, deren Außenkontur im wesentlichen der Innenkontur des herzustellenden Formteils entspricht. Dieser Abschnitt ist in Figur 7 mit der Bezugszahl 25 bezeichnet. Direkt an den Abschnitt 25, der den Formraum 5 bildet, schließt ein Abschnitt 26, dessen Außendurchmesser gegenüber den Außendurchmessern des Abschnitts 25 etwas vergrößert ist, an. Dieser Abschnitt 26, der nicht konisch ausgeführt ist, dient dazu, mit dem Stützring 3 in Kontakt zu treten. An den Abschnitt 26 schließt sich ein weiterer Abschnitt 27 an, dessen Außendurchmesser gegenüber dem Außendurchmesser des Abschnitts 26 etwas reduziert ist. Wie im folgenden noch erläutert wird, dient dieser Abschnitt 27 dazu, einen Ringraum 22 zwischen Kern 2 einerseits und Stützring 3 andererseits für die Zuführung von Ausblasluft zur Verfügung zu stellen.

An den Abschnitt 27 schließt sich dann der Abschnitt 28 an, der konisch ausgeführt ist, wobei dessen Außendurchmesser in Richtung des Kernfußes, an dem der Zapfen 14 angeordnet ist, zunimmt. Der Abschnitt 28 bildet somit den Außenkonus 8 des Kerns 2. Im Vergleich mit Figur 2 fällt auf, daß erfindungsgemäß der Außenkonus 8 hier von der Kernspitze weg im wesentlichen in den Kernfuß 8 verlegt wurde. Im Gegensatz zu der in den Figuren 1 bis 3 gezeigten Ausführungsform endet bei der erfindungsgemäßen Ausführungsform der konische Abschnitt 28 nun nicht mehr direkt neben dem kammerbildenden Abschnitt 25, was zur Folge hat, daß er mit diesem nicht in Verbindung steht und daher der konische Abschnitt 28, wenn mit demselben Werkzeug ein Formling mit anderen Konturen hergestellt werden soll, seine Ausgestaltung beibehalten kann. Es ist daher möglich, ohne Kenntnis der genauen Ausgestaltung des Formlings bereits mehrere Kerne mit identischen Außenkonen herzustellen. Danach kann dann die Anpassung an die tatsächliche Geometrie des Vorformlings erfolgen, wobei dann nur noch die Außenkontur des Kerns bearbeit werden muß, der bereits vorgefertigte Außenkonus aber unverändert bleiben kann. Dies senkt die Herstellungskosten des Formnestes.

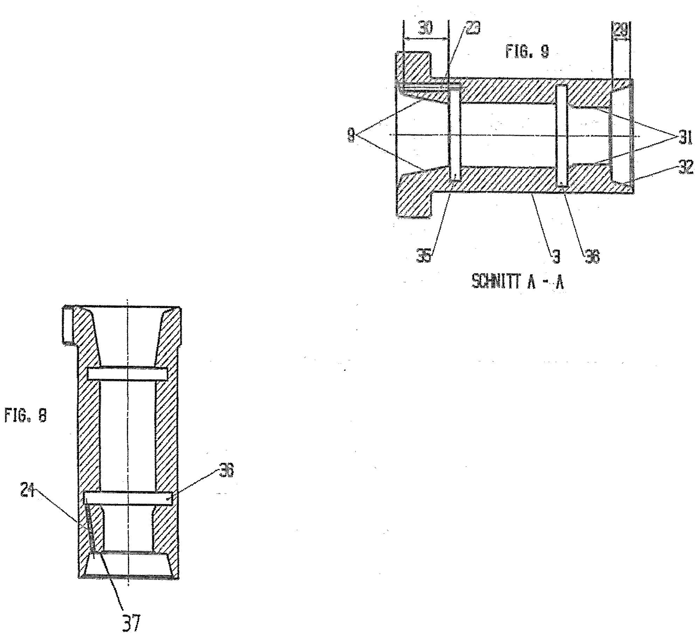

In den Figuren 8 und 9 sind zwei Querschnittszeichnungen des erfindungsgemäßen Stützrings 3 dargestellt. Dieser Stützring 3 weist in seinem Fußbereich 30 einen Innenkonus 9 auf, der derart ausgebildet ist, daß sich der Innendurchmesser des im wesentlichen zylindrischen Stützringes 3 in Richtung des Stützringfußes erweitert. Der Innenkonus 9 ist dabei derart an den Außenkonus 8 des Kerns 2 angepaßt, daß, wie in der Figur 5 zu erkennen ist, im zusammengesetzten Zustand der Innenkonus 9 des Stützringes 3 auf dem Außenkonus 8 des Kerns 2 aufliegt und dadurch der Kern 2 und der Stützring 3 eine Schließkraft auf die Halsbacke 2 ausübt. Im vorderen Abschnitt des in Figur 8 gezeigten erfindungsgemäßen Stützringes weist der Stützring eine nicht konische innere Fläche 31 auf, die derart angepaßt ist, daß sie mit dem Abschnitt 26 des Kerns 2 in Eingriff tritt. Die Verbindung zwischen der nicht-konischen Fläche 31 des Stützrings 3 einerseits und der nicht-konischen Fläche 26 des Kerns 2 andererseits stellt eine Zentrierfunktion zur Verfügung, da der Kern 2 in dem Stützring 3 aufgrund der genannten Kontaktierung zentriert wird.

Im vorderen Bereich 29 des Stützrings 3 weist der Stützring einen Innenkonus 32 auf, der derart ausgebildet ist, daß sich dessen Innendurchmesser in Richtung des Stützringfußes verringert.

Wie man in Figur 5 erkennt, ist dieser konische Abschnitt dafür vorgesehen, mit einem entsprechenden konischen Abschnitt der Halsbacke 4 in Eingriff zu treten.

Der Stützring 3 weist an seinem Fußende im Bereich des Abschnitts 30 mit Innenkonus 9 einen als Bohrung ausgeführten Kanal 23 auf. Dieser Kanal 23 erstreckt sich von dem Fuß bis zu einem Abschnitt 35 des Stützrings 3 mit erweitertem Innendurchmesser. Wie in Figur 5 zu erkennen ist, wird im zusammengesetzten Zustand zwischen dem Abschnitt 27 des Kerns 2 und dem Stützring 3 ein Ringraum 22 gebildet, d. h. in diesem Bereich berührt der Kern 2 den Stützring 3 nicht. Der Kanal 23 dient zusammen mit dem Abschnitt 35 mit erweitertem Innendurchmesser des Stützrings 3 dazu, den Fuß des Stützringes mit dem Ringraum 22 für das Durchleiten von Ausblasluft zu verbinden. Dadurch ist gewährleistet, daß, obgleich der Stützring 3 über den Innen- bzw. Außenkonus 8, 9 mit dem Kern 2 in Kontakt steht, Ausblasluft an dieser Kontaktfläche vorbei in den Ringraum 22 geleitet werden kann. Der Stützring 3 weist im Bereich seiner Spitze einen weiteren Abschnitt 36 mit erweitertem Innendurchmesser auf. Weiterhin ist ein Kanal 24 nahe des Abschnittes 29 des Stützringes 3 vorgesehen. Der Kanal 24 ist in Figur 9, die eine andere Schnittansicht des Stützringes aus Figur 8 darstellt, zu sehen. Mit anderen Worten sind der Kanal 23 und der Kanal 24 nicht in derselben Schnittebene angeordnet. Der Kanal 24 verbindet den Abschnitt 36 mit erweitertem Innendurchmesser mit der Stirnfläche 37, d.h. der Fläche des Stützringes 3, die dem Fuß abgewandt ist. In Figur 6 ist zu erkennen, daß der Kanal 24 an der Kontaktfläche zwischen Stützring 3 und Halsbacke 4 endet. Durch die beschriebene Kanal- und Ringraumkonstruktion ist es daher möglich, Ausblasluft von der Aufnahmeplatte (nicht gezeigt) durch den Stützring bzw. an dem Kern entlang bis zu der Halsbacke 4 zu leiten, ohne daß die Kontaktflächen zwischen den konischen Abschnitten des Stützrings und des Kerns sowie der nicht-konischen Kontaktflächen unterbrochen werden müssen.

Bei der in Figur 5 gezeigten Ausführungsform bildet sich bei der Herstellung des Formteils an der Verbindungsstelle zwischen Halsbacke 4 und Kavität 1 eine leicht sichtbare Formtrennungslinie 33 aus.

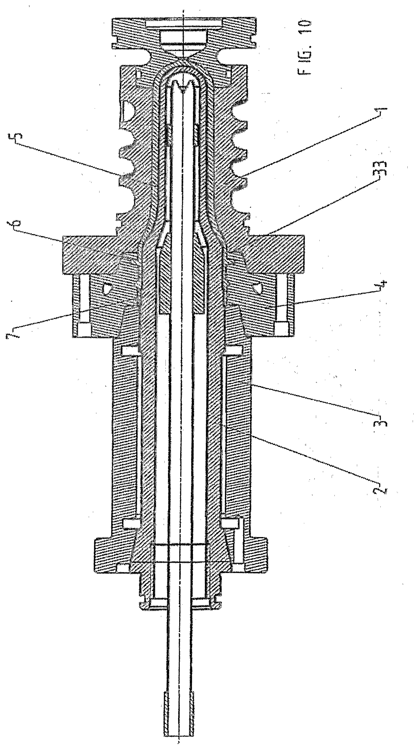

In Figur 10 ist daher eine zweite Ausführungsform der vorliegenden Erfindung gezeigt, bei der die Formtrennungslinie 33 im Vergleich zu der in Figur 5 gezeigten Ausführungsform weiter in Richtung Hals- bzw. Tragring 6 verlegt worden ist.

Diese Verlegung der Trennlinie 33 führt zu einer Reduzierung der Dicke der Halsbacke 4 in Richtung der Kavität 1. Da die Halsbacke 4 aus statischen Gründen nicht beliebig dünn ausgeführt werden kann, erfordert die Verlegung der Trennlinie eine Umgestaltung der Verbindung zwischen Halsbacke 4 und Stützring 3. In Figur 10 ist zu erkennen, daß die Halsbacke 4 auf ihrer den Stützring 3 zugewandten Seite nun einen Innenkonus anstelle eines Außenkonus hat, der mit einem Außenkonus des Stützrings 3 in Eingriff tritt.

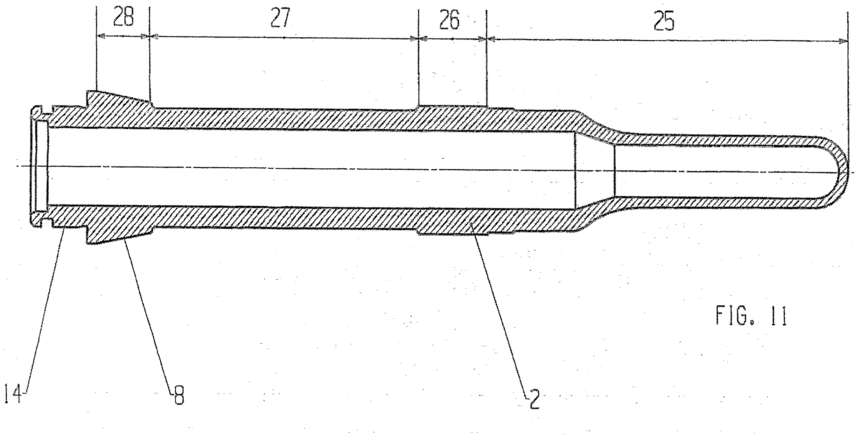

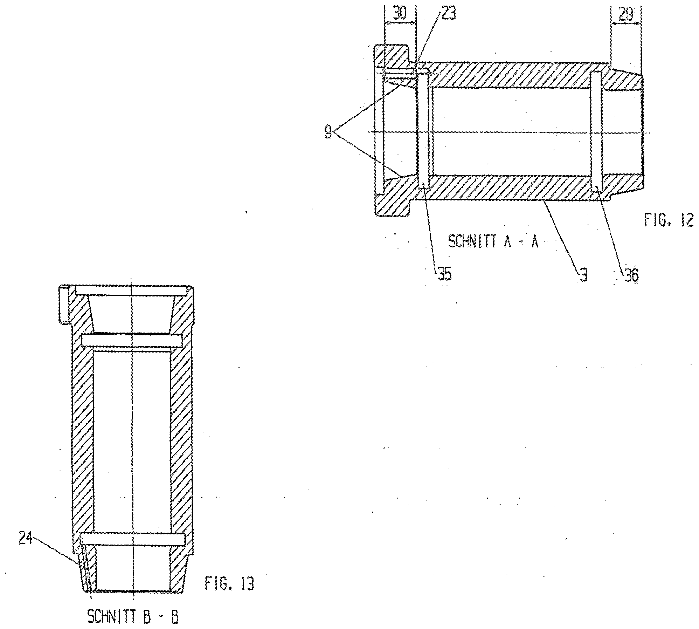

In Figur 11 ist eine Schnittansicht des Kerns 2 der in Figur 10 gezeigten Ausführungsform dargestellt. Deutlich zu erkennen ist, daß der Kern 2 der Ausführungsform der Figur 10 identisch mit dem Kern der Ausführungsform von Figur 5 sein kann, so daß bei der Umrüstung der Maschine bei einem Wechsel des herzustellenden Formlings gegebenenfalls der Kern nicht ausgetauscht werden muß. In Figur 12 und 13 sind zwei unterschiedliche Schnittansichten des Stützringes der in Figur 10 gezeigten Ausführungsform gezeigt.

Deutlich zu erkennen ist, daß sich der Stützring 3 in der in den Figuren 10 bis 13 gezeigten Ausführungsform von dem Stützring 3, der in den Figuren 5 bis 9 gezeigten Ausführungsform lediglich an dem Verbindungsbereich zwischen Stützring 3 und Halsbacke 4 unterscheidet.

Hier ist im vorderen Bereich 29 des Stützrings 3 einen Außenkonus 32 vorgesehen, der derart ausgebildet ist, daß sich dessen Außendurchmesser in Richtung des Stützringfußes erweitert.

Wie man in Figur 10 erkennt, ist dieser konische Abschnitt dafür vorgesehen, mit einem entsprechenden konischen Abschnitt der Kavität 1 in Eingriff zu treten.

Für eine Beschreibung der Details wird daher auf die vorherige Beschreibung verwiesen.

Durch einen Vergleich der erfindungsgemäßen Ausführungsform gemäß Figur 13 mit der Ausführungsform des Standes der Technik gemäß Figur 4 wird deutlich, daß insbesondere die Führung der Blasluft deutlich einfacher und damit mit erheblich weniger Kostenaufwand verwirklicht werden kann.

### Bezugszeichenliste

- 1: Kavität
- 2: Kern
- 3: Stützring
- 4: Halsbacke
- 5: Formraum
- 6: Hals- bzw. Tragring
- 7: Gewinde
- 8: Außenkonus
- 9: Innenkonus
- 10: Ringspalt
- 11: Anschlußbohrung
- 12: Kühlrohr
- 13: Bodeneinsatz
- 14: Zapfen
- 15: Anschlußseite des Stützrings
- 16: Anschlußseite der Kavität
- 17: Kühlkanäle
- 18: erster Abschnitt mit erweitertem Innendurchmesser
- 19: zweiter Abschnitt mit erweitertem Innendurchmesser
- 20: Konuselement
- 21: Langbohrung des Ausblasluftkanals
- 22: Ringraum
- 23: Bohrung, Kanal
- 24: Zuführungsbohrung für Luft
- 25: kammerbildender Kernabschnitt
- 26: Kernabschnitt mit vergrößertem Außendurchmesser
- 27: Abschnitt
- 28: Abschnitt mit Außenkonus
- 29: Konusbereich
- 30: Fußbereich
- 31: Fläche
- 32: Innenkonus
- 33: Formtrennlinie
- 35: Abschnitt
- 36: Abschnitt
- 37: Stirnfläche des Stützrings

## Patentansprüche

1. Formnest für die Herstellung von hohlen Formteilen, wobei das Formest einen Formraum (5) bildet und eine Kavität (1), deren Innenkontur zumindest abschnittweise der Außenkontur des herzustellenden Formteils entspricht, einen Kern (2), dessen Außenkontur zumindest abschnittweise der Innenkontur des herzustellenden Formteils entspricht, eine Halsbacke (4), deren Innenkontur zumindest abschnittsweise der Außenkontur des Halsbereichs des herzustellenden Formteils entspricht sowie einen Stützring (3), der zumindest bei geschlossenem Formnest den Kern (2) zumindest teilweise umgibt, aufweist, wobei der Stützring (3) einen Innenkonus (9) und der Kern (2) einen korrespondierenden Außenkonus (8) aufweist, die derart ausgebildet sind, daß zumindest bei geschlossenem Formnest der Innenkonus (9) des Stützrings (3) mit dem Außenkonus (8) des Kerns (2) in Kontakt tritt, wobei der Stützring eine Aufnahmeseite für das in Eingriff treten mit einer Aufnahmeplatte und eine Kavitätsseite für das in Eingriff treten mit der Halsbacke hat, wobei sich weder der Innenkonus (9) des Stützrings (3) noch der Außenkonus (8) des Kerns (2) direkt an den Formraum (5) anschließen, wobei der Kern (2) zwischen dem der Innenkontur des herzustellenden Formteils entsprechenden Abschnitt und dem Außenkonus einen Abschnitt mit zylindrischer Außenkontur hat, **dadurch gekennzeichnet, dass** der Stützring (3) einen Abschnitt mit zylindrischer Innenkontur hat, der zumindest bei geschlossenem Formwerkzeug mit dem Abschnitt mit zylindrischer Außenkontur des Kerns (2) in Kontakt steht.

2. Formnest nach Anspruch 1 **dadurch gekennzeichnet, daß** der Innenkonus (9) des Stützrings (3) im wesentlichen an der der Kavität (1) abgewandten Seite des Stützrings (3) vorgesehen ist.

3. Formnest nach einem der Ansprüche 1 bis 2, **dadurch gekennzeichnet, daß** eine Zuführung für Ausblasluft vorgesehen ist.

4. Formnest nach Anspruch 3, **dadurch gekennzeichnet, daß** die Zuführung für Ausblasluft zumindest abschnittweise durch einen zwischen Kern (2) und Stützring (3) gebildeten Ringraum (22) verwirklicht ist.

5. Formnest nach Anspruch 3 oder 4, **dadurch gekennzeichnet, daß** die Zuführung für Ausblasluft zumindest im Bereich des Innenkonus (9) des Stützrings (3) durch eine vorzugsweise im wesentlichen in Längsrichtung des Stützrings im Stützring (3) verlaufende Bohrung (23) verwirklicht ist.

6. Formnest nach einem der Ansprüche 3 bis 5, **dadurch gekennzeichnet, daß** die Zuführung für Ausblasluft zumindest abschnittsweise durch eine im Stützring (3) verlaufende Bohrung (24) verwirklicht ist, wobei diese Bohrung (24) vorzugsweise derart angeordnet ist, daß sie bei geschlossenem Formwerkzeug an der Kontaktfläche von Stützring (3) und Halsbacke (4) endet.

7. Kern für ein Formnest nach einem der Ansprüche 1 bis 6 mit einem Abschnitt, der für die Bildung des Formraumes vorgesehen ist, wobei der Kern (2) einen Außenkonus (8) aufweist, wobei der Außenkonus weder im Formraumbildenden Abschnitt noch im direkten Anschluß hieran angeordnet ist, und der Kern (2) eine den Formraum (5) bildende Seite und eine Anschlußseite zur Aufnahme des Kerns (2) an bzw. in einer Aufnahmeplatte aufweist, **dadurch gekennzeichnet, dass** der Kern (2) einen Abschnitt (27) zwischen dem Außenkonus (8) und dem den Formraum (5) bildenden Abschnitt (25) aufweist, dessen Außendurchmesser gegenüber dem Abschnitt mit Außenkonus und auch gegenüber einem zylindrischen Abschnitt (26), der zwischen dem Außenkonus und dem den Formraum (5) bildenden Abschnitt (25) angeordnet ist, reduziert ist.

8. Kern nach Anspruch 7, **dadurch gekennzeichnet, daß** der Kern (2) zwischen dem der Innenkontur des herzustellenden Formteils entsprechenden Abschnitt und dem Außenkonus (8) einen Abschnitt mit zylindrischer Außenkontur hat.

9. Kern nach Anspruch 7 oder 8, **dadurch gekennzeichnet, daß** der Außenkonus (8) im wesentlichen im Bereich der Anschlußseite angeordnet ist.

10. Stützring für ein Formnest nach einem der Ansprüche 1 bis 6 mit einem Abschnitt, der für die Bildung des Formraumes (5) vorgesehen ist, wobei der Stützring (3) einen Innenkonus (9) hat, wobei der Innenkonus (9) nicht an dem Formraumbildenden Abschnitt und nicht in direktem Anschluß an diesen angeordnet ist, wobei zwischen Innenkonus (9) und Kavitätsseite ein Abschnitt (31) mit zylindrischer Innenkontur vorgesehen ist.

11. Stützring nach Anspruch 10, **dadurch gekennzeichnet, daß** der Stützring (3) eine Aufnahmeseite für das in Eingriff treten mit einer Aufnahmeplatte und eine Kavitätsseite für das in Eingriff treten mit der Kavität bzw. der Halsbacke (4) hat.

12. Stützring nach einem der Ansprüche 10 bis 11, **dadurch gekennzeichnet, daß** der Innenkonus (9) im wesentlichen im Bereich der Aufnahmeseite angeordnet ist.

13. Stützring nach einem der Ansprüche 10 bis 12, **dadurch gekennzeichnet, daß** eine im wesentlichen in Längsrichtung verlaufende Anschlußbohrung (23) für die Aufnahme von Ausblasluft zumindest in dem den Innenkonus (9) aufweisenden Abschnitt (30) vorgesehen ist.

14. Stützring nach Anspruch 13, **dadurch gekennzeichnet, daß** eine Zuführungsbohrung (24) für Ausblasluft im wesentlichen im Abschnitt mit zylindrischer Innenkontur (31) vorgesehen ist.

## Claims

1. Mould cavity for the production of hollow mouldings, wherein the mould cavity forms a mould space (5), and a cavity (1) whose inner contour corresponds at least in sections to the outer contour of the moulding to be produced, a core (2), the outer contour of which corresponds at least in sections to the inner contour of the moulding to be produced, a neck follower (4), the inner contour of which corresponds at least in sections to the outer contour of the neck region of the moulding to be produced as well as a supporting ring (3) which at least partially surrounds the core (2) when the mould cavity is closed, wherein the supporting ring (3) has an inner cone (9) and the core (2) a corresponding outer cone (8), which are formed such that at least when the mould cavity is closed, the inner cone (9) of the supporting ring (3) comes into contact with the outer cone (8) of the core (2), wherein the supporting ring has a reception side for the engagement with a reception plate and a cavity side for the engagement with the neck follower, wherein neither the inner cone (9) of the supporting ring (3) nor the outer cone (8) of the core (2) directly joins onto the mould space (5), wherein the core (2) between the section corresponding to the inner contour of the mouldings to be produced and the outer cone has a section with cylindrical outer contour, **characterized in that** the supporting ring (3) has a section with cylindrical inner contour, which is in contact at least when the moulding tool is closed with the section with cylindrical outer contour of the core (2).

2. Mould cavity according to claim 1, **characterized in that** the inner cone (9) of the supporting ring (3) is provided substantially at the side of the supporting ring (3) facing away from the cavity (1).

3. Mould cavity according to one of claims 1 to 2, **characterized in that** a feed channel is provided for blow-out air.

4. Mould cavity according to claim 3, **characterized in that** the feed channel for blow-out air is realized at least in sections by an annulus (22) formed between core (2) and supporting ring (3).

5. Mould cavity according to claim 3 or 4, **characterized in that** the feed channel for blow-out air is realized at least in the area of the inner cone (9) of the supporting ring (3) by a bore (23) preferably running substantially in longitudinal direction of the supporting ring in the supporting ring (3).

6. Mould cavity according to one of claims 3 to 5, **characterized in that** the feed channel for blow-out air is realized at least in sections by a bore (24) running in the supporting ring (3), wherein this bore (24) is preferably arranged such that when the moulding tool is closed it ends at the contact surface of supporting ring (3) and neck follower (4).

7. Core for a mould cavity according to one of claims 1 to 6 with a section which is provided for the formation of the mould space, wherein the core (2) has an outer cone (8), wherein the outer cone is neither attached to the mould-space-forming section nor directly joined onto it, and the core (2) has a side forming the mould space (5) and a connection side for housing the core (2) against or in a reception plate, **characterized in that** the core (2) has a section (27) between the outer cone (8) and the section (25) forming the mould space (5) whose outer diameter is reduced compared with the section with outer cone and also compared with a cylindrical section (26) which is arranged between the outer cone and the section (25) forming the mould space (5).

8. Core according to claim 7, **characterized in that** between the section corresponding to the inner contour of the moulding to be produced and the outer cone (8) the core (2) has a section with cylindrical outer contour.

9. Core according to claim 7 or 8, **characterized in that** the outer cone (8) is arranged substantially in the area of the connection side.

10. Supporting ring for a mould cavity according to one of claims 1 to 6 with a section which is provided for the formation of the mould space (5), wherein the supporting ring (3) has an inner cone (9), wherein the inner cone (9) is not attached to the mould-space-forming section and does not directly join onto it, wherein a section (31) with cylindrical inner contour is provided between inner cone (9) and cavity side.

11. Supporting ring according to claim 10, **characterized in that** the supporting ring (3) has a reception side for the engagement with a reception plate and a cavity side for the engagement with the cavity or the neck follower (4).

12. Supporting ring according to one of claims 10 to 11, **characterized in that** the inner cone (9) is arranged substantially in the area of the reception side.

13. Supporting ring according to one of claims 10 to 12, **characterized in that** a connecting bore (23) running substantially in longitudinal direction is provided for receiving blow-out air at least in the section (30) having the inner cone (9).

14. Supporting ring according to claim 13, **characterized in that** a feed channel (24) for blow-out air is provided substantially in the section with cylindrical inner contour (31).

## Revendications

1. Cavité de moule pour la fabrication de pièces moulées creuses, la cavité de moule formant un espace de moulage (5) et présentant une cavité (1) dont le contour intérieur correspond au moins en partie au contour extérieur de la pièce moulée à produire, un noyau (2) dont le contour extérieur correspond au moins en partie au contour intérieur de la pièce moulée à produire, un goulot (4) dont le contour intérieur correspond au moins en partie au contour extérieur de la région du goulot de la pièce moulée à produire ainsi qu'un anneau support (3) qui, au moins lorsque la cavité de moule est fermée, entoure au moins partiellement le noyau (2), l'anneau support (3) comportant un cône intérieur (9) et le noyau (2) un cône extérieur (8) correspondant, lesquels sont réalisés de telle façon qu'au moins lorsque la cavité de moule est fermée, le cône intérieur (9) de l'anneau support (3) entre en contact avec le cône extérieur (8) du noyau (2), l'anneau support présentant un côté réception pour la mise en prise avec une plaque de réception et un côté cavité pour la mise en prise avec le goulot, ni le cône intérieur (9) de l'anneau support (3), ni le cône extérieur (8) du noyau (2) n'étant directement adjacents à l'espace de moulage (5), le noyau (2) entre la partie correspondant au contour intérieur de la pièce moulée à produire et le cône extérieur présentant une partie au contour extérieur cylindrique,
**caractérisée en ce que** l'anneau support (3) présente une partie au contour intérieur cylindrique qui, au moins lorsque l'outil de moulage est fermé, est en contact avec la partie au contour extérieur cylindrique du noyau (2).

2. Cavité de moule selon la revendication 1, **caractérisée en ce que** le cône intérieur (9) de l'anneau support (3) est prévu sensiblement au niveau du côté de l'anneau support (3) opposé à la cavité (1).

3. Cavité de moule selon l'une des revendications 1 à 2, **caractérisée en ce qu'**est prévue une alimentation pour l'air soufflé.

4. Cavité de moule selon la revendication 3, **caractérisée en ce que** l'alimentation pour l'air soufflé est réalisée au moins en partie à travers un espace annulaire (22) formé entre le noyau (2) et l'anneau support (3).

5. Cavité de moule selon la revendication 3 ou 4, **caractérisée en ce que** l'alimentation pour l'air soufflé est réalisée au moins dans la région du cône intérieur (9) de l'anneau support (3) à travers un alésage (23) s'étendant dans l'anneau support (3), de préférence sensiblement dans la direction longitudinale de l'anneau support.

6. Cavité de moule selon l'une des revendications 3 à 5, **caractérisée en ce que** l'alimentation pour l'air soufflé est réalisée au moins en partie à travers un alésage (24) s'étendant dans l'anneau support (3), ledit alésage (24) étant disposé, de préférence, de façon à se terminer, lorsque l'outil de moulage est fermé, au niveau de la surface de contact de l'anneau support (3) et du goulot (4).

7. Noyau pour une cavité de moule selon l'une des revendications 1 à 6, dont une partie est prévue pour la formation de l'espace de moulage, le noyau (2) présentant un cône extérieur (8), le cône extérieur étant disposé ni dans la partie formant l'espace de moulage, ni de manière directement adjacente à celle-ci, et le noyau (2) présentant un côté formant l'espace de moulage (5) et une face de raccordement pour la réception du noyau (2) au niveau de ou dans une plaque de réception, **caractérisé en ce que** le noyau (2) présente une partie (27) entre le cône extérieur (8) et la partie (25) formant l'espace de moulage (5), dont le diamètre extérieur est réduit par rapport à la partie ayant un cône extérieur et également par rapport à une partie cylindrique (26) qui est disposée entre le cône extérieur et la partie (25) formant l'espace de moulage (5).

8. Noyau selon la revendication 7, **caractérisé en ce que** le noyau (2) entre la partie correspondant au contour intérieur de la pièce moulée à produire et le cône extérieur (8) comporte une partie ayant un contour extérieur cylindrique.

9. Noyau selon la revendication 7 ou 8, **caractérisé en ce que** le cône extérieur (8) est disposé sensiblement dans la région de la face de raccordement.

10. Anneau support pour une cavité de moule selon l'une des revendications 1 à 6, dont une partie est prévue pour la formation de l'espace de moulage (5), l'anneau support (3) présentant un cône intérieur (9), le cône intérieur (9) étant disposé ni dans la partie formant l'espace de moulage, ni de manière directement adjacente à celle-ci, une partie (31) au contour intérieur cylindrique étant prévue entre le cône intérieur (9) et un côté cavité.

11. Anneau support selon la revendication 10, **caractérisé en ce que** l'anneau support (3) présente un côté réception pour la mise en prise avec une plaque de réception et un côté cavité pour la mise en prise avec la cavité ou le goulot (4).

12. Anneau support selon l'une des revendications 10 à 11, **caractérisé en ce que** le cône intérieur (9) est disposé sensiblement dans la région du côté réception.

13. Anneau support selon l'une des revendications 10 à 12, **caractérisé en ce qu'**est prévu un alésage de raccordement (23) s'étendant sensiblement en direction longitudinale pour recevoir l'air soufflé au moins dans la partie (30) présentant le cône intérieur (9).

14. Anneau support selon la revendication 13, **caractérisé en ce qu'**est prévu un alésage d'amenée (24) de l'air soufflé sensiblement dans la partie ayant un contour intérieur cylindrique (31).
